# FASCICULE DE BREVET EUROPEEN

(11) **EP 3 856 675 B1**
(45) Date de publication et mention de la délivrance du brevet: **27.11.2024**
(21) Numéro de dépôt: 19773444.5
(22) Date de dépôt: 27.09.2019
(51) Int. Cl.: B67B 3/064, G01N 21/88, G01N 21/90

(54) **DISPOSITIF ET PROCÉDÉ DE FOURNITURE D'ELEMENTS DE BOUCHAGE TRIÉS**
VORRICHTUNG UND VERFAHREN ZUM BEREITSTELLEN VON SORTIERTEN STOPFENELEMENTEN
DEVICE AND METHOD FOR PROVIDING SORTED STOPPER ELEMENTS

(30) Priorité: 28.09.2018 FR 1858927
(43) Date de publication de la demande: 04.08.2021
(73) Titulaire: Sidel Participations, 76930 Octeville-sur-Mer (FR)
(72) Inventeur: ROTH, Emmanuel, 67116 Reichstett (FR); SPIESSER, Daniel, 67116 Reichstett (FR); SCHMITT, Arnaud, 67116 Reichstett (FR)
(74) Mandataire: Sidel Group
(86) Numéro de dépôt international: PCT/EP2019/076141
(87) Numéro de publication internationale: WO 2020/064986

(56) Documents cités:
- EP-A1- 2 899 535
- EP-A1- 3 372 539
- DE-A1- 102012 216 163
- US-A1- 2006 037 892
- US-B2- 7 911 602

## Description

La présente invention entre dans le domaine de la fourniture d'éléments de bouchage triés pour alimenter un poste de travail aval, au sein d'une ligne de production.

De tels éléments de bouchage consistent, non limitativement, en des capsules ou des bouchons, destinés à refermer une ouverture présente aux niveaux de conteneurs, notamment des flacons ou des bouteilles, en verre, en plastique ou en métal, notamment en aluminium, ou encore des briques cartonnées. De tels éléments de bouchage présentent généralement une forme globalement tubulaire aplatie.

De manière connue, la fourniture d'éléments de bouchage, tels des bouchons ou capsules s'effectue par l'intermédiaire d'un module de triage, recevant en entrée lesdits bouchons ou capsules déversés en vrac au sein d'un réservoir, notamment une trémie. Ce module assure, d'une part, le tri de ces bouchons ou capsules afin de les disposer selon un positionnement adapté en vue, d'autre part, d'approvisionner de façon continue en bouchons ou capsules triés, un poste de travail situé en aval sur la ligne de production. Les rôles principaux d'un tel poste de travail aval sont de remplir les conteneurs et ensuite de les fermer au moyen desdits éléments de bouchage triés. Par exemple, ledit poste de travail aval peut consister en un module d'embouteillage pourvu d'une unité de bouchage des conteneurs, ou bien une unité de stérilisation desdits éléments de bouchage.

En d'autres termes, un module de triage permet de prendre des bouchons ou capsules initialement pêle-mêle et d'orienter correctement tous ces éléments de bouchage, selon un flux régulier et continu alimentant au moins le poste de travail aval ayant pour fonction d'obturer chaque conteneur au moyen d'un élément de bouchage. Un tel module de triage est généralement appelé « cap-feeder ».

De manière connue, un module de triage comprend en partie inférieure un réservoir recevant les éléments de bouchage en vrac et, plongeant au sein dudit réservoir, un moyen d'élévation généralement formé d'un tapis sans fin orienté verticalement et entraîné de manière à extraire et à assurer l'élévation desdits éléments. Plus précisément, ledit tapis comporte sur une face une succession de tasseaux juxtaposés sur sa longueur, lesdits tasseaux formant des logements s'étendant transversalement, d'un bord à l'autre, et correspondant aux diamètres desdits éléments de bouchage à prélever au sein du réservoir. De plus, l'inclinaison du tapis, la configuration ainsi que les dimensions desdits tasseaux, assurent un positionnement déterminé des bouchons prélevés. En effet, un bouchon qui se positionne au sein d'un logement selon une autre configuration que celle souhaitée, par exemple à l'envers ou en quinconce, se retrouve déséquilibré et retombe naturellement sous l'effet de la gravité au fur et à mesure du déplacement vertical dudit convoyeur, assurant ainsi qu'une fois arrivés en fin de course, seuls restent au sein des logements des bouchons ordonnés selon la configuration choisie. Cette technique de tri est communément dénommée « chute d'eau » ou « waterfall ».

Ensuite, les éléments de bouchage triés sont en principe accumulés et traités par un moyen de référencement, notamment une roue de référencement, de manière à constituer un flux régulier d'éléments de bouchage vers une machine aval, selon une cadence dépendant de ladite machine aval qu'il faut approvisionner en continu. Pour ce faire, ledit flux est envoyé en sortie du moyen de référencement vers un convoyeur généralement ascendant, sous forme notamment de courroie à branches. Les éléments de bouchage sont déplacés de façon séparée entre lesdites branches, à intervalles réguliers.

Une problématique majeure réside dans le fait que ledit flux régulier doit impérativement comporter des éléments de bouchage correctement positionnés, correspondant à la production souhaitée, mais aussi qui ne présentent aucun défaut. Ces différents critères constituent la « recette » de l'unité d'embouteillage. En d'autres termes, les bouchons doivent être dans le bon sens, correspondre aux conteneurs à boucher (en particulier leur couleur et/ou l'éventuel visuel qui est souvent apposé en face supérieure de tels bouchons), mais aussi ils ne doivent présenter aucun défaut susceptible d'entraîner un mauvais bouchage des récipients, voire un dysfonctionnement préjudiciable au niveau du poste de travail aval.

Dans ce contexte, une fois arrivés en haut du moyen d'élévation, les éléments de bouchage ont subi un tri qui ne permet pas d'assurer, d'une part, avec certitude qu'aucun bouchon ne présente un raté d'orientation, d'autre part, qu'il est conforme, à savoir qu'il ne présente pas de défaut intrinsèque, notamment provenant de sa fabrication, comme des différences de couleur, de taille ou de forme, ou bien qu'il n'y a pas un corps étranger présent. En outre, un bouchon peut comprendre une bague d'inviolabilité, attachée par une zone de moindre résistance, dont il convient de réciproquement vérifier la présence et l'intégrité, au même titre que celle du bouchon lui-même.

Dès lors, il est impérativement nécessaire de vérifier la conformité de l'aspect de chacun des éléments de bouchage, pour s'assurer qu'ils répondent tous à chacun des différents critères de ladite recette, que ce soit en termes d'orientation et/ou de toute caractéristique intrinsèque. Tout élément présentant un défaut doit être expulsé dudit flux régulier.

Actuellement, une telle vérification de conformité est effectuée de façon automatique par l'intermédiaire d'un système de contrôle via un moyen de vision. Ce dernier effectue une capture visuelle, de type photographique ou vidéo, dont le faisceau de capture est orienté vers le chemin traversé par les éléments de bouchage constituant ledit flux régulier, de manière à scanner chacun d'entre eux. En somme, une ou plusieurs caméras sont positionnées et orientées par rapport au chemin de circulation pour filmer chaque bouchon dudit flux. En particulier, une telle capture visuelle s'effectue au niveau du moyen de référencement ou au niveau du convoyeur ascendant de sorte que chaque élément de bouchage traverse le faisceau et que son image soit capturée. Le système de contrôle effectue alors automatiquement une comparaison par traitement numérique de chaque image capturée, en temps réel, afin de vérifier la bonne correspondance de tous les critères d'une recette, pour chaque élément de bouchage dudit flux.

En cas de défaut avéré, même en cas de doute, le système de contrôle envoie une commande vers un moyen d'éjection situé en aval le long du convoyeur ascendant et par rapport à la capture visuelle. Étant donné qu'à partir dudit moyen de référencement, on connaît exactement l'intervalle entre les éléments de bouchage, ainsi que leur vitesse de déplacement, par conséquent leur position à tout instant, il est possible de commander de façon précise ledit moyen d'éjection, afin d'extraire du flux chaque élément de bouchage non conforme, à savoir qui ne passe pas cette étape de contrôle visuel.

Un inconvénient récurrent des systèmes existants équipés d'une capture visuelle réside dans les erreurs de capture, provenant d'un défaut de capture, du fait que les couleurs des éléments de bouchage, surtout aux niveaux de leur pourtour, se confondent avec celles de l'environnement structurel, à savoir lorsque ces couleurs sont proches ou identiques.

Une solution existante consiste à améliorer la luminosité en positionnant une ou plusieurs sources lumineuses éclairant la zone du faisceau de capture visuelle. Toutefois, si elle améliore la luminosité, une telle solution n'est pas compatible avec un fonctionnement à haute cadence, notamment lorsque les bouchons sont d'une couleur proche de la structure. En effet, dans ce cas, le temps d'exposition doit être assez long nécessitant ainsi une vitesse de déplacement des éléments de bouchage ralentie pour effectuer correctement le contrôle visuel.

Le document EP 2.372.539 Al divulgue un dispositif et un procédé ayant les caractéristiques du préambule des revendications independentes 1 et 9.

La présente invention a pour but de pallier les inconvénients de l'état de la technique en améliorant le contraste entre tout élément de bouchage et l'environnement structurel qu'il traverse au niveau du faisceau de capture visuelle. En particulier, l'invention envisage de changer au moins en partie l'apparence de la structure, au niveau de la zone de capture, de manière à trancher visuellement avec la couleur des éléments de bouchage qui y circulent.

Plus précisément, l'invention prévoit au moins deux sections présentant des couleurs différentes, bien distinctes l'une de l'autre. Préférentiellement, les couleurs des deux sections peuvent être complémentaires. Dès lors, en fonction des couleurs des éléments de bouchage à contrôler, en particulier de leur pourtour, on obtient lors de leur passage au travers de l'une des deux sections, une différence flagrante avec un contraste élevé, permettant un contrôle fiable de leur conformité. Il suffit alors de choisir de contrôler la conformité des éléments de bouchage d'une production sur la zone avec le contraste le plus adapté.

L'invention concerne un dispositif de fourniture d'éléments de bouchage triés pour alimenter un poste de travail en aval, comprenant :
- un moyen d'élévation pour réaliser un tri desdits éléments selon leur orientation ;
- en aval dudit moyen d'élévation, un moyen de référencement à l'unité desdits éléments de bouchage en un flux régulier ;
- en sortie dudit moyen de référencement, un convoyeur pour amener les éléments référencés, un par un, vers ledit poste de travail ;
- un moyen de vision pour contrôler la conformité desdits éléments lorsqu'ils arrivent au niveau d'une zone de contrôle dudit dispositif, ladite zone de contrôle s'étendant au niveau du moyen de référencement et/ou du convoyeur ;
- situé en aval dudit moyen de vision, un moyen d'expulsion des éléments non conformes.

Un tel dispositif de fourniture se caractérise par le fait qu'au moins la zone de contrôle comprend au moins deux sections successives comportant chacune une couleur distincte.

De façon additionnelle, mais aucunement limitative, un tel dispositif de fourniture peut comprendre un moyen de déplacement dudit moyen de vision, depuis une position en vis-à-vis d'une desdites sections vers une position en vis-à-vis de l'autre desdites sections, et inversement.

Ledit moyen de déplacement peut être prévu manuel.

Ledit moyen de déplacement peut être prévu automatique.

Ledit moyen de vision peut être fixe et peut comprendre un faisceau large de capture orienté vers lesdites sections.

Ledit moyen de vision peut être fixe et peut comprendre au moins un premier faisceau de capture orienté vers une desdites sections ; un deuxième faisceau de capture orienté vers une autre desdites sections.

Deux sections peuvent être de couleurs complémentaires.

Une des sections peut être de couleur blanche tandis que l'autre des sections peut être de couleur noire.

L'invention concerne aussi un procédé de fourniture d'éléments de bouchage triés pour alimenter un poste de travail en aval, comprenant au moins les étapes suivantes :
- effectuer un tri des éléments selon leur orientation au sein d'un moyen d'élévation ;
- référencer à l'unité les éléments triés puis les acheminer un par un en un flux régulier vers le poste de travail via un convoyeur ;
- effectuer un contrôle visuel des éléments avec un moyen de vision au cours de leur référencement et/ou de leur acheminement vers le poste de travail aval au niveau d'une zone de contrôle ; et
- commander l'éjection des éléments détectés non conformes lors du contrôle visuel.

Un tel procédé de fourniture se caractérise en ce que la zone de contrôle comprend au moins deux sections successives comportant chacune une couleur distincte ; on réalise l'étape de contrôle visuel au niveau d'une section choisie dont la couleur assure un meilleur contraste avec les éléments à contrôler.

De façon additionnelle, mais aucunement limitative du procédé de fourniture, ledit moyen de vision peut être fixe et comprendre un faisceau large de capture orienté vers lesdites sections.

Ledit moyen de vision peut être fixe et peut comprendre au moins un premier faisceau de capture orienté vers une desdites sections et un deuxième faisceau de capture orienté vers l'autre desdites sections ; et en ce qu'on peut sélectionner ledit premier faisceau ou ledit deuxième faisceau en fonction de ladite section choisie.

Le moyen de vision peut être mobile et on peut déplacer ledit moyen de vision en vis-à-vis de ladite section choisie.

On peut déplacer ledit moyen de vision de manière manuelle.

On peut déplacer ledit moyen de vision de manière automatique.

Ainsi, l'invention permet de déterminer un contraste optimal des éléments de bouchage à contrôler, en modifiant les conditions optiques de l'encadrement qu'ils traversent, en fonction des aspects desdits éléments à contrôler. L'invention permet de choisir la différenciation visuelle qu'il est alors possible d'obtenir lors du contrôle des éléments de bouchage, assurant de s'adapter à la recette de chaque production, connue ou à venir.

D'autres caractéristiques et avantages de l'invention ressortiront de la description détaillée qui va suivre des modes de réalisation non limitatifs de l'invention, en référence aux figures annexées dans lesquelles :
- la figure 1 représente schématiquement une vue en perspective montrant de façon globale un dispositif de fourniture d'éléments de bouchage triés selon l'invention ;
- la figure 2 représente schématiquement une vue en perspective d'un détail d'un dispositif de fourniture, montrant deux sections aux aspects différents et un élément de bouchage passant au niveau d'une desdites sections ;
- la figure 3 représente schématiquement une vue selon une coupe verticale d'un détail d'un mode de réalisation, montrant un élément passant au niveau d'une des sections avec une vision orientée vers cette section ;

- la figure 4 est une figure similaire à la figure 3, montrant un élément passant au niveau d'une autre section avec une vision orientée vers cette autre section, après déplacement vertical ascendant du moyen de vision ; et
- la figure 5 représente schématiquement une vue selon une coupe transversale au niveau d'une des sections, montrant un positionnement latéral du moyen de vision en vis-à-vis d'une desdites sections.

La présente invention concerne la fourniture d'éléments de bouchage 1.

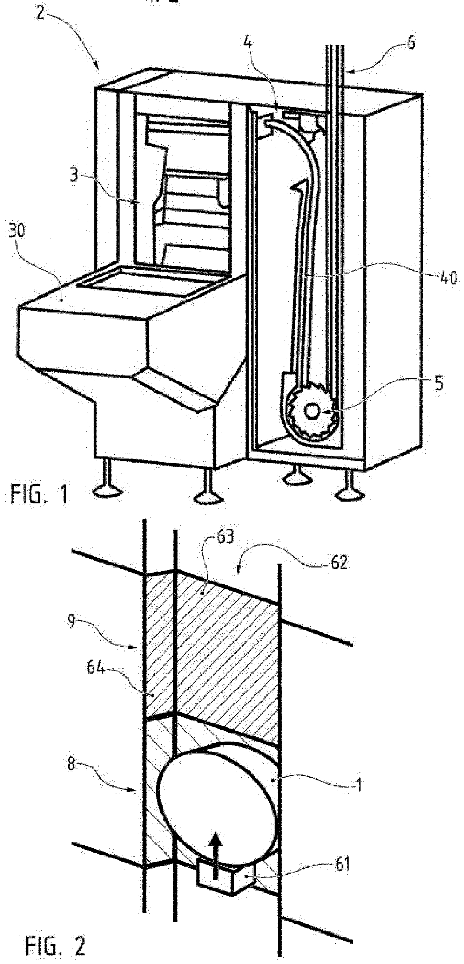

De tels éléments de bouchage 1 consistent, non limitativement, en des capsules ou des bouchons, destinés à refermer une ouverture présente aux niveaux de conteneurs, notamment des flacons ou des bouteilles, en verre, en plastique ou en métal, notamment en aluminium, ou encore des briques cartonnées. De tels éléments de bouchage présentent généralement une forme globalement tubulaire aplatie, comme visible sur la figure 2.

Plus avant, les éléments de bouchage 1 doivent être triés, en vue d'alimenter un poste de travail (non représenté), situé en aval au sein d'une ligne de production. Un tel tri est effectué au travers d'un dispositif de fourniture 2.

Un exemple d'un tel dispositif 2 est représenté sur la figure 1. Il comprend un moyen d'élévation 3 pour réaliser un tri desdits éléments de bouchage 1 selon leur orientation.

Comme évoqué précédemment, ledit moyen d'élévation 3 peut consister en une « waterfall », comprenant un tapis de triage plongeant au sein d'une trémie ou bac 30, où sont déversés au préalable en vrac les éléments de bouchage 1.

En sortie, les éléments de bouchage 1 sont expulsés du moyen d'élévation 3, notamment par train successifs, de façon discontinue. Ils peuvent traverser une zone de transfert 4, pourvue d'au moins une colonne 40 unifilaire, s'étendant verticalement ou sensiblement verticalement, au sein de laquelle les éléments de bouchage 1 viennent s'accumuler par empilement, assurant un stock tampon, de manière à permettre un approvisionnement en continu.

En aval dudit moyen d'élévation 3, le dispositif 2 comprend un moyen de référencement 5 à l'unité desdits éléments de bouchage 1 en un flux régulier. En d'autres termes un pas est créé entre les produits successifs.

Un tel moyen de référencement 5 peut comprendre une roue de référencement, prévue rotative. Généralement, elle comprend des logements périphériques, au sein desquels les éléments de bouchage 1 accumulés viennent successivement s'insérer un à un, au fur et à mesure de la rotation de ladite roue, notamment depuis l'extrémité inférieure de la colonne 40. Lors de leur passage au sein de cette roue de référencement, les éléments de bouchage 1 peuvent subir alors un tri supplémentaire, permettant notamment de vérifier leur orientation angulaire selon un angle choisi.

En sortie dudit moyen de référencement 5, le dispositif 2 comprend un convoyeur 6, notamment ascendant pour amener les éléments référencés 1, un par un, depuis le moyen de référencement 5 vers ledit poste de travail.

Un tel convoyeur 6 peut comprendre une courroie 60 équipée de branches 61, situées à intervalles réguliers, venant pousser les éléments de bouchage 1, formant le flux régulier le long dudit convoyeur 6. De préférence, un tel convoyeur 6 est ascendant. Ce convoyeur 6 peut s'étendre selon toutes les directions, préférentiellement verticalement ou sensiblement verticalement.

En outre, selon l'exemple de réalisation représenté sur la figure 2, le convoyeur 6 peut comprendre une voie de cheminement 62, prévue en creux, à l'intérieur de laquelle circulent les éléments de bouchage 1. Une telle voie comprend un fond 63, entouré de part et d'autre par des parois latérales 64. Un évidement peut être prévu au sein dudit fond 63, au travers duquel traversent les branches 61. Ainsi, les éléments de bouchage 1 sont poussés depuis le bas vers le haut, en circulant verticalement à l'intérieur de ladite voie 62.

Afin de vérifier la conformité des éléments de bouchage 1 triés et envoyés par le dispositif de fourniture 2, l'invention prévoit une étape de contrôle de chacun desdits éléments de bouchage 1. Un tel contrôle est prévu visuel, de manière à vérifier les aspects de chaque élément de bouchage 1, comme ses caractéristiques intrinsèques, notamment de forme et couleur, tout aussi bien que son bon positionnement, mais aussi la présence de tout corps étranger.

Pour ce faire, le dispositif 2 comprend un moyen de vision 7 pour contrôler la conformité desdits éléments de bouchage 1 lorsqu'ils arrivent au niveau d'une zone de contrôle.

Une telle zone de contrôle peut s'étendre au niveau du moyen de référencement 5 et/ou du convoyeur 6.

En cas de contrôle non concluant d'un élément de bouchage 1, il doit être éjecté. Pour ce faire, le dispositif 2 comprend, situé en aval dudit moyen de vision 7, un moyen d'expulsion des éléments de bouchage 1 non conformes. En particulier, le moyen d'expulsion est situé au niveau du convoyeur 6, sous forme d'un organe mobile d'éjection, commandé automatiquement et de façon synchronisée avec l'avancement du flux régulier des éléments de bouchage 1. Ainsi, en cas de contrôle non conforme d'un élément de bouchage 1, étant donné que sa vitesse de déplacement est connue et sa position à un instant précis, par exemple au moment du contrôle visuel, il est possible de commander, à un endroit en aval du cheminement dudit élément 1 non conforme, le déclenchement du moyen d'expulsion au moment où cet élément 1 non conforme passera en vis-à-vis.

Avantageusement, l'invention prévoit d'améliorer le contrôle visuel effectué sur les éléments de bouchage 1, en particulier en augmentant le contraste entre lesdits éléments et leur environnement. En d'autres termes, l'invention prévoit de pouvoir choisir, en fonction des caractéristiques vérifiables d'un type ou format d'éléments de bouchage 1, le contraste le plus adapté en fonction du contrôle à effectuer. En particulier, le contraste le plus adapté peut être choisi préférentiellement en fonction des limites ou des bordures des éléments de bouchage 1 à contrôler, à savoir que la différenciation visuelle entre le pourtour d'un élément de bouchage 1 et les surfaces environnantes doit être nette et précise.

Pour ce faire, ladite zone de contrôle comprend au moins deux sections 8,9 successives comportant chacune une couleur distincte. Il est alors possible de choisir quelle section 8 ou 9 constitue le contraste le mieux adapté en fonction des aspects visuels à contrôler de l'élément de bouchage 1, puis d'effectuer le contrôle sur cette section 8 (ou 9), plutôt qu'au niveau de l'autre 9 (ou réciproquement 8).

On notera que les sections 8,9 se suivent par rapport au sens de déplacement des éléments de bouchage 1, de façon contiguë ou accolée comme visible sur les figures 2 à 4. Selon une autre configuration possible, les sections 8,9 peuvent être espacées, séparée par une section intermédiaire sans couleur spécifiquement choisie ou déterminée.

Selon les exemples représentés sur les figures 2 à 4, la zone de contrôle comprend deux sections 8,9, présentant des couleurs différentes (représentées par des hachures). est possible d'avoir plus de deux sections 8,9, en particulier un nombre de sections avec autant de couleurs différentes que le nombre de productions en fonction des différentes de caractéristiques des éléments de bouchage 1 à contrôler.

En outre, les couleurs des sections 8,9 peuvent être choisies et spécifiquement déterminées, à savoir qu'au moins une section, de préférence chaque section 8,9, peut présenter une couleur volontairement modifiée, par rapport aux couleurs initiales de la structure environnante. Cette modification peut provenir d'un changement de matériau pour la structure de l'environnement, ou bien par apposition d'un recouvrement, tel de la peinture ou un film coloré. Un tel choix de la modification d'au moins une couleur de section 8,9 peut être effectué au moment de la fabrication, de l'installation ou bien ultérieurement, de façon dédiée au moment d'une production, de façon personnalisable par un opérateur du dispositif 2.

Préférentiellement, la modification des couleurs d'au moins une des sections 8,9 s'effectue au niveau du convoyeur 6 notamment de la voie de cheminement 62 du convoyeur 6, sur les surfaces du fond 63 et/ou de l'une et/ou l'autre des parois latérales 64. Préférentiellement, toutes les couleurs de l'intégralité de l'environnement, notamment des éléments structurels fixes, au sein d'une section 8,9 sont modifiées et unifiées selon une seule et même couleur.

Dans un autre cas de figure, la modification des couleurs des sections 8,9 peut s'effectuer au niveau du moyen de référencement 5, sur la surface de la roue de référencement et/ou sur les parois internes des logements répartis régulièrement sur le pourtour de ladite roue et destinés à recevoir chacun un élément de bouchage 1.

De manière préférentielle, la couleur à la couleur du reste du dispositif 1.

Selon un mode de réalisation, les deux sections 8,9 peuvent être de couleurs complémentaires. En somme, les couleurs de deux sections 8,9 différentes sont bien différentiables, notamment à l'œil nu, sans risque de confusion. Elles peuvent être opposées. Ainsi, elles peuvent par exemple être respectivement verte et rouge, ou orange et bleue ou encore noire et blanche.

De préférence, une des sections 8 peut être de couleur blanche tandis que l'autre des sections 9 est de couleur noire.

Plus particulièrement, les matériaux constituant le convoyeur 6 sont noirs et une des sections 8 est entièrement modifiée en blanc, l'autre section 9 étant alors constituée par le convoyeur 6 à l'état de couleur initial.

Ainsi, en contrôlant l'aspect visuel des éléments de bouchage 1 au moment où ils passent en vis-à-vis de l'une ou l'autre des sections 8,9, permet d'obtenir le contraste le mieux adapté par le moyen de vision 7.

Selon un mode de réalisation, ledit moyen de vision 7 peut comprendre au moins un appareil photographique, de type caméra ou de type capteur optique. Le moyen de vision 7 permet d'enregistrer un ou plusieurs clichés de chaque élément de bouchage 1, voire d'enregistrer une séquence, de type vidéo. Un tel moyen de vision 7 est prévu numérique.

En outre, des moyens informatiques annexes assurent le traitement numérique de façon automatique, notamment par comparaison avec un cliché de référence d'un élément de bouchage 1 conforme.

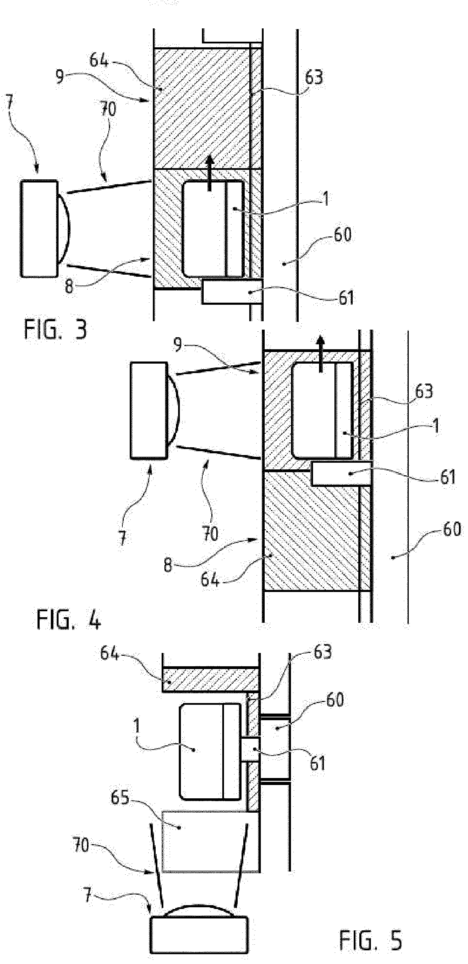

Selon un mode de réalisation, comme représenté sur les figures 3 et 4, le dispositif 2 comprend un moyen de déplacement du moyen de vision 7, depuis une position en vis-à-vis d'une desdites sections 8 (ou 9) vers une position en vis-à-vis de l'autre desdites section 9 (ou respectivement 8), et inversement. Ainsi, au lancement de la production, en fonction des caractéristiques visuelles à contrôler des éléments de bouchage 1, il est possible de choisir le positionnement du moyen de vision 7, pour effectuer la capture visuelle et le contrôle en vis-à-vis de la section 8,9 avec le meilleur contraste.

Selon un mode de réalisation, ledit moyen de déplacement peut être prévu manuel, à savoir qu'il est déplacé physiquement par un opérateur au travers d'une intervention directement sur le dispositif 2.

Selon un autre mode de réalisation, ledit moyen de déplacement est prévu automatique. Dans un cas, un opérateur détermine la section 8,9 avec le meilleur contraste et commande le déplacement du moyen de vision 7 qui vient alors se positionner en vis-à-vis de ladite section 8,9 choisie.

Dans un autre cas, la section 8,9 avec le meilleur contraste peut être enregistrée pour une production donnée d'éléments de bouchage 1 et, au moment du lancement de ladite production, le moyen de déplacement amène automatiquement, sans intervention annexe, le moyen de vision 7 en face de la section 8,9 préalablement enregistrée pour cette production, en fonction desdits éléments de bouchage 1 à contrôler.

Dans un autre cas, la section 8,9 avec le meilleur contraste peut être déterminée automatiquement par le dispositif 2, au travers d'une reconnaissance de la couleur des éléments de bouchage 1, notamment par un capteur adapté, puis une comparaison numérique avec les sections 8,9 en vue d'obtenir le meilleur contraste possible. Il est aussi possible que le dispositif 2 interprète directement des données relatives à la recette, connues et enregistrées, en vue de choisir la section 8,9 avec le meilleur contraste.

Selon un autre mode de réalisation, le moyen de vision 7 est prévu fixe. Il peut comprendre au moins un premier faisceau de capture 70 orienté vers une desdites sections 8,9 et un deuxième faisceau de capture 70 orienté vers l'autre desdites sections 9 (ou respectivement 8). Dans ce cas de figure, il est possible de contrôler les éléments de bouchage 1 sur chaque section 8,9, incluant celle avec le meilleur contraste. Il est aussi possible de choisir l'un des faisceaux de capture 70 à activer, au travers de moyens adaptés, pour effectuer le contrôle sur la section possédant le meilleur contraste avec les éléments de bouchage 1.

Selon un autre mode de réalisation, le moyen de vision 7 est fixe mais peut comprendre un large faisceau de capture 70, permettant de couvrir au moins deux sections 8,9. Un élément de bouchage 1 est alors contrôlé lors de son passage sur chaque section 8,9, en particulier celle offrant un meilleur contraste. Plusieurs captures peuvent être effectuées et comparées, afin de déterminer automatiquement celle qui présente avec chaque élément de bouchage 1 le meilleur contraste.

Comme visible sur les figures 3 et 4, un moyen de vision 7 peut être situé en face des sections 8,9, à savoir de façon frontale par rapport au convoyeur 6 ou au moyen de référencement 5, notamment parallèlement ou sensiblement parallèlement au fond 63.

Selon l'exemple visible sur la figure 5, un moyen de vision 7 peut être positionné sur un des côtés des sections 8,9, à savoir latéralement par rapport au convoyeur 6 ou au moyen de référencement 5. Dès lors, au moins une portion 65 d'une paroi latérale 64 de la voie de cheminement 62 dudit convoyeur 6 peut comprendre une ouverture ou est constituée d'un matériau translucide, autorisant la capture visuelle par ledit moyen de vision 7. Il est ainsi possible de contrôler transversalement les éléments de bouchage 1, sur leur tranche, notamment pour vérifier l'intégrité de la bague d'inviolabilité.

De façon alternative, le moyen de vision 7 peut être positionné de côté par rapport au moyen de référencement 5, placé en périphérie et orienté radialement vers l'intérieur des logements destinés à recevoir les éléments de bouchage 1, permettant ainsi de les contrôler latéralement sur leur tranche.

L'invention concerne aussi un procédé de fourniture d'éléments de bouchage 1 triés pour alimenter le poste de travail en aval.

Préférentiellement, un tel procédé de fourniture est dédié à la mise en œuvre du dispositif 2 de fourniture selon l'invention.

Comme évoqué précédemment, on effectue un tri des éléments de bouchage 1 selon leur orientation au sein du moyen d'élévation 3. Ensuite, on référence à l'unité les éléments de bouchage 1 triés, pour les acheminer un par un en un flux régulier vers le poste de travail via le convoyeur 6.

Un contrôle visuel des éléments de bouchage 1 est effectué avec un moyen de vision 7 au cours de leur référencement et/ou de leur acheminement vers le poste de travail aval au niveau de la zone de contrôle.

En fonction du résultat du contrôle visuel, en cas de non-conformité détectée, on commande l'éjection des éléments de bouchage 1 détectés présentant ou susceptibles de présenter une anomalie.

Comme évoqué précédemment, la zone de contrôle comprend au moins deux sections 8,9 successives comportant chacune une couleur distincte.

Avantageusement, on réalise l'étape de contrôle visuel au niveau d'une section 8 ou 9 choisie dont la couleur assure un meilleur contraste avec les éléments de bouchage 1 à contrôler.

De façon additionnelle, il peut être prévu de combiner l'amélioration du contraste au travers du choix du contrôle au niveau d'une des sections 8,9, avec une fluctuation configurable de l'intensité lumineuse. Ainsi, il est possible de modifier la luminosité, en fonction de la couleur de la section 8,9 choisie pour le contrôle et aussi des caractéristiques des éléments de bouchage 1, comme leur couleur mais aussi leur matériau. La capture visuelle est améliorée, avec notamment un temps d'exposition plus court, assurant un contrôle en un laps de temps diminué, permettant d'augmenter la vitesse de déplacement des éléments de bouchage 1, et ainsi la cadence de production du dispositif de fourniture 2.

## Revendications

1. Dispositif (2) de fourniture d'éléments de bouchage (1), triés pour alimenter un poste de travail en aval, comprenant :
- un moyen d'élévation (3) pour réaliser un tri desdits éléments (1) selon leur orientation ;
- en aval dudit moyen d'élévation (3), un moyen de référencement (5) à l'unité desdits éléments de bouchage (1) en un flux régulier ;
- en sortie dudit moyen de référencement (5), un convoyeur (6) pour amener les éléments (1) référencés, un par un, vers ledit poste de travail ;
- un moyen de vision (7) pour contrôler la conformité desdits éléments (1) lorsqu'ils arrivent au niveau d'une zone de contrôle dudit dispositif (2), ladite zone de contrôle s'étendant au niveau du moyen de référencement (5) et/ou du convoyeur (6) ;
- situé en aval dudit moyen de vision (7), un moyen d'expulsion des éléments (1) non conformes ;
**caractérisé par le fait qu'**au moins :
- la zone de contrôle comprend au moins deux sections (8,9) successives comportant chacune une couleur distincte.

2. Dispositif (2) de fourniture selon la revendication 1, **caractérisé par le fait qu'**il comprend un moyen de déplacement dudit moyen de vision (7), depuis une position en vis-à-vis d'une desdites sections (8) vers une position en vis-à-vis de l'autre desdites sections (9), et inversement.

3. Dispositif (2) de fourniture selon la revendication 2, **caractérisé par le fait que** ledit moyen de déplacement est prévu manuel.

4. Dispositif (2) de fourniture selon la revendication 2, **caractérisé par le fait que** ledit moyen de déplacement est prévu automatique.

5. Dispositif (2) de fourniture selon la revendication 1, **caractérisé par le fait que** ledit moyen de vision (7) est fixe et comprend un faisceau (70) large de capture orienté vers lesdites sections (8,9).

6. Dispositif (2) de fourniture selon la revendication 1, **caractérisé par le fait que** ledit moyen de vision (7) est fixe et comprend au moins :
- un premier faisceau (70) de capture orienté vers une desdites sections (8) ;
- un deuxième faisceau (70) de capture orienté vers une autre desdites sections (9).

7. Dispositif (2) de fourniture selon l'une quelconque des revendications précédentes, **caractérisé par le fait que** deux sections (8,9) sont de couleurs complémentaires.

8. Dispositif (2) de fourniture selon la revendication 7, **caractérisé par le fait qu'**une des sections (8) est de couleur blanche tandis que l'autre des sections (9) est de couleur noire.

9. Procédé de fourniture d'éléments de bouchage (1) triés pour alimenter un poste de travail en aval, comprenant au moins les étapes suivantes :
- effectuer un tri des éléments (1) selon leur orientation au sein d'un moyen d'élévation (3) ;
- référencer à l'unité les éléments (1) triés puis les acheminer un par un en un flux régulier vers le poste de travail via un convoyeur (6) ;
- effectuer un contrôle visuel des éléments (1) avec un moyen de vision (7) au cours de leur référencement et/ou de leur acheminement vers le poste de travail aval au niveau d'une zone de contrôle ; et
- commander l'éjection des éléments (1) détectés non conformes lors du contrôle visuel ;
**caractérisé en ce que** :
- la zone de contrôle comprend au moins deux sections (8,9) successives comportant chacune une couleur distincte ;
- on réalise l'étape de contrôle visuel au niveau d'une section (8,9) choisie dont la couleur assure un meilleur contraste avec les éléments (1) à contrôler.

10. Procédé de fourniture selon la revendication 9, **caractérisé en ce que** ledit moyen de vision (7) est fixe et comprend un faisceau (70) large de capture orienté vers lesdites sections (8,9).

11. Procédé de fourniture selon la revendication 9, **caractérisé en ce que** ledit moyen de vision (7) est fixe et comprend au moins un premier faisceau (70) de capture orienté vers une desdites sections (8) et un deuxième faisceau (70) de capture orienté vers l'autre desdites sections (9) ; et **en ce qu'**on sélectionne ledit premier faisceau (70) ou ledit deuxième faisceau (70) en fonction de ladite section (8,9) choisie.

12. Procédé de fourniture selon la revendication 9, **caractérisé en ce que** le moyen de vision (7) est mobile et on déplace ledit moyen de vision en vis-à-vis de ladite section choisie (8,9).

13. Procédé de fourniture selon la revendication 12, **caractérisé en ce qu'**on déplace ledit moyen de vision (7) de manière manuelle.

14. Procédé de fourniture selon la revendication 10, **caractérisé en ce qu'**on déplace ledit moyen de vision (7) de manière automatique.

## Patentansprüche

1. Vorrichtung (2) zum Bereitstellen von sortierten Verschlusselementen (1), um eine nachgeschaltete Arbeitsstation zu versorgen, wobei die Vorrichtung Folgendes aufweist:
- ein Hebemittel (3), um eine Sortierung der Elemente (1) nach ihrer Ausrichtung durchzuführen;
- dem Hebemittel (3) nachgeschaltet ein Mittel (5) zur Einzelreferenzierung der Verschlusselemente (1) in einem gleichmäßigen Fluss:
- am Ausgang des Referenzierungsmittels (5) einen Förderer (6), um die referenzierten Elemente (1) einzeln zu der Arbeitsstation zu transportieren;
- ein Sichtmittel (7), um die Konformität der Elemente (1) zu überprüfen, wenn sie in einem Prüfbereich der Vorrichtung (2) ankommen, wobei sich der Prüfbereich am Referenzierungsmittel (5) und/oder am Förderer (6) erstreckt;
- dem Sichtmittel (7) nachgeschaltet ein Mittel zum Auswerfen der nicht konformen Elemente (1); **dadurch gekennzeichnet, dass** mindestens:
- der Prüfbereich mindestens zwei aufeinanderfolgende Abschnitte (8, 9) mit jeweils einer eigenen Farbe aufweist.

2. Vorrichtung (2) zum Bereitstellen nach Anspruch 1, **dadurch gekennzeichnet, dass** sie ein Mittel zum Bewegen des Sichtmittels (7) von einer Position gegenüber dem einen der Abschnitte (8) zu einer Position gegenüber dem anderen der Abschnitte (9) und umgekehrt aufweist.

3. Vorrichtung (2) zum Bereitstellen nach Anspruch 2, **dadurch gekennzeichnet, dass** das Mittel zum Bewegen manuell vorgesehen ist.

4. Vorrichtung (2) zum Bereitstellen nach Anspruch 2, **dadurch gekennzeichnet, dass** das Mittel zum Bewegen automatisch vorgesehen ist.

5. Vorrichtung (2) zum Bereitstellen nach Anspruch 1, **dadurch gekennzeichnet, dass** das Sichtmittel (7) feststehend ist und einen breiten Erfassungsstrahl (70) aufweist, der auf die Abschnitte (8, 9) gerichtet ist.

6. Vorrichtung (2) zum Bereitstellen nach Anspruch 1, **dadurch gekennzeichnet, dass** das Sichtmittel (7) feststehend ist und mindestens Folgendes aufweist:
- einen ersten Erfassungsstrahl (70), der auf einen der Abschnitte (8) gerichtet ist;
- einen zweiten Erfassungsstrahl (70), der auf einen anderen der Abschnitte (9) gerichtet ist.

7. Vorrichtung (2) zum Bereitstellen nach einem der vorhergehenden Ansprüche, **dadurch gekennzeichnet, dass** zwei Abschnitte (8, 9) komplementäre Farben haben.

8. Vorrichtung (2) zum Bereitstellen nach Anspruch 7, **dadurch gekennzeichnet, dass** einer der Abschnitte (8) eine weiße Farbe hat, während der andere der Abschnitte (9) eine schwarze Farbe hat.

9. Verfahren zum Bereitstellen von sortierten Verschlusselementen (1), um eine nachgeschaltete Arbeitsstation zu versorgen, das mindestens die folgenden Schritte aufweist:
- Sortieren der Elemente (1) nach ihrer Ausrichtung innerhalb eines Hebemittels (3);
- Einzelreferenzieren der sortierten Elemente (1) und anschließendes einzelnes Transportieren zur Arbeitsstation in einem gleichmäßigen Fluss über einen Förderer (6);
- Durchführen einer visuellen Prüfung der Elemente (1) mit einem Sichtmittel (7) in einem Prüfbereich während ihrer Referenzierung und/oder ihres Transports zur nachgeschalteten Arbeitsstation; und
- Steuern des Auswerfens der Elemente (1), die bei der visuellen Prüfung als nicht konform erkannt wurden; **dadurch gekennzeichnet, dass**:
- der Prüfbereich mindestens zwei aufeinanderfolgende Abschnitte (8, 9) mit jeweils einer eigenen Farbe aufweist;
- der Schritt der visuellen Prüfung in einem ausgewählten Abschnitt (8, 9) durchgeführt wird, dessen Farbe einen besseren Kontrast zu den zu prüfenden Elementen (1) gewährleistet.

10. Verfahren zum Bereitstellen nach Anspruch 9, **dadurch gekennzeichnet, dass** das Sichtmittel (7) feststehend ist und einen breiten Erfassungsstrahl (70) aufweist, der auf die Abschnitte (8, 9) gerichtet ist.

11. Verfahren zum Bereitstellen nach Anspruch 9, **dadurch gekennzeichnet, dass** das Sichtmittel (7) feststehend ist und mindestens einen ersten Erfassungsstrahl (70) aufweist, der auf einen der Abschnitte (8) gerichtet ist, und einen zweiten Erfassungsstrahl (70), der auf den anderen der Abschnitte (9) gerichtet ist, und dadurch, dass der erste Strahl (70) oder der zweite Strahl (70) in Abhängigkeit von dem gewählten Abschnitt (8, 9) ausgewählt wird.

12. Verfahren zum Bereitstellen nach Anspruch 9, **dadurch gekennzeichnet, dass** das Sichtmittel (7) beweglich ist und das Sichtmittel gegenüber dem ausgewählten Abschnitt (8, 9) bewegt wird.

13. Verfahren zum Bereitstellen nach Anspruch 12, **dadurch gekennzeichnet, dass** das Sichtmittel (7) manuell bewegt wird.

14. Verfahren zum Bereitstellen nach Anspruch 10, **dadurch gekennzeichnet, dass** das Sichtmittel (7) automatisch bewegt wird.

## Claims

1. Device (2) for providing stopper elements (1) that are sorted in order to feed a downstream workstation, comprising:
- a lifting means (3) for sorting said elements (1) in accordance with their orientation;
- downstream of said lifting means (3) a means (5) for referencing said stopper elements (1) one by one in a regular flow;
- at the outlet of said referencing means (5) a conveyor (6) for bringing the referenced elements (1) one by one to said workstation;
- a vision means (7) for verifying the conformance of said elements (1) when they arrive in an inspection zone of said device (2), said inspection zone being located at the referencing means (5) and/or the conveyor (6);
- located downstream of said vision means (7) a means for expelling those elements (1) that do not conform; **characterized in that** at least:
- the inspection zone comprises at least two successive sections (8, 9) each including a distinct colour.

2. Provider device (2) according to Claim 1, **characterized in that** it comprises a means for moving said vision means (7) from a position facing one of said sections (8) to a position facing the other of said sections (9) and vice versa.

3. Provider device (2) according to Claim 2, **characterized in that** said moving means is manual.

4. Provider device (2) according to Claim 2, **characterized in that** said moving means is automatic.

5. Provider device (2) according to Claim 1, **characterized in that** said vision means (7) is fixed and comprises a wide capture beam (70) oriented towards said sections (8,9).

6. Provider device (2) according to Claim 1, **characterized in that** said vision means (7) is fixed and comprises at least:
- a first capture beam (70) oriented toward one of said sections (8);
- a second capture beam (70) oriented toward another of said sections (9).

7. Provider device (2) according to any one of the preceding claims, **characterized in that** two sections (8,9) are complementary colours.

8. Provider device (2) according to Claim 7, **characterized in that** one of the sections (8) is white in colour whereas the other of the sections (9) is black in colour.

9. Method of providing sorted stopper elements (1) to supply a downstream workstation, comprising at least the following steps:
- sorting the elements (1) according to their orientation by means of a lifting means (3);
- referencing the sorted elements (1) one by one and then routing them one by one in a regular flow to the workstation via a conveyor (6);
- visually inspecting the elements (1) with a vision means (7) during referencing thereof and/or routing thereof to the downstream workstation at the level of an inspection zone; and
- commanding the ejection of the elements (1) detected as non-conforming at the time of the visual inspection; **characterized in that**:
- the inspection zone comprises at least two successive sections (8,9) each including a distinct colour;
- the visual inspection step is carried out at the level of a chosen section (8, 9) the colour of which provides better contrast with the elements (1) to be inspected.

10. Supply method according to Claim 9, **characterized in that** said vision means (7) is fixed and comprises a wide capture beam (70) oriented towards said sections (8,9) .

11. Supply method according to Claim 9, **characterized in that** said vision means (7) is fixed and comprises at least a first capture beam (70) oriented toward one of said sections (8) and a second capture beam (70) oriented toward the other of said sections (9) and **in that** said first beam (70) or said second beam (70) is selected as a function of said chosen section (8,9).

12. Supply method according to Claim 9, **characterized in that** the vision means (7) is mobile and said vision means is moved facing said chosen section (8,9).

13. Supply method according to Claim 12, **characterized in that** said vision means (7) is moved manually.

14. Supply method according to Claim 10, **characterized in that** said vision means (7) is moved automatically.
